Europäisches Patentamt

European Patent Office

Office européen des brevets

(19)

(11) Veröffentlichungsnummer: **0 527 436 A1**

# (12) EUROPÄISCHE PATENTANMELDUNG

(21) Anmeldenummer: **92113437.5**

(22) Anmeldetag: **06.08.92**

(51) Int. Cl.5: **C08G 77/36**

(30) Priorität: **08.08.91 DE 4126319**

(43) Veröffentlichungstag der Anmeldung:
**17.02.93 Patentblatt 93/07**

(84) Benannte Vertragsstaaten:
**DE ES FR GB**

(71) Anmelder: **WACKER-CHEMIE GMBH**
**Hanns-Seidel-Platz 4**
**W-8000 München 83(DE)**

(72) Erfinder: **Knies, Wolfgang, Dr.**
**Von-Baeyer-Strasse 11**
**W-8263 Burghausen(DE)**
Erfinder: **Vogl, Günther**
**Burghauser Strasse 30**
**W-8262 Altötting(DE)**
Erfinder: **Frey, Volker, Dr.**
**Jahnweg 5**
**W-8263 Burghausen(DE)**

(54) **Verfahren zur Pyrolyse von Siliconkautschukvulkanisaten.**

(57) In dem Verfahren zur Pyrolyse von Silikonkautschukvulkanisaten werden die Vulkanisate auf 350 bis 700°C erhitzt und die entstehenden flüchtigen Siloxane kondensiert. Das Verfahren liefert wiederverwendbare Produkte, insbesondere flüchtige Siloxane und Füllstoffe.

EP 0 527 436 A1

Rank Xerox (UK) Business Services
(3.10/3.5x/3.0.1)

Die vorliegende Erfindung betrifft ein Verfahren zur Pyrolyse von Silikonkautschukvulkanisaten zur Rückgewinnung flüchtiger Siloxane und gegebenenfalls der Füllstoffe.

Durch die starke Verbreitung von Silikonkautschuk nimmt die Menge an Silikonkautschukabfällen stark zu. Ferner fallen bei der Verarbeitung von Silikonkautschuken, z.B. beim Entgraten relativ reine Vulkanisatreste an, die bislang zum größten Teil in den Müll gegeben werden.

Aus der GB-A-716 024 (W.A. McCowan; ausgegeben am 29.09.1954 für Dunlop Rubber Co. Ltd., GB) ist ein Verfahren zum Regenerieren von Silikonkautschukvulkanisat-Abfällen bekannt, bei dem die Vulkanisate mit überhitztem Wasserdampf teilweise hydrolysiert werden. Die Produkte können noch nicht vulkanisiertem Silikonkautschuk beigemischt werden. Andere Verwendungsmöglichkeiten entfallen, da keine Trennung der Silikone vom Füllstoff erfolgt.

Die US-A-2 673 843 (B.J. Humphrey et al.; ausgegeben am 30.03.1954 für Connecticut Hard Rubber Co., USA) beschreibt ein Verfahren zur teilweisen Depolymerisation von Silikonkautschukvulkanisat durch Behandlung mit wasserfreien Säuren bei ungefähr Raumtemperatur. Man erhält ein flüssiges Gemisch niedermolekularer Siloxane, das in weiteren Verfahrensschritten von Säuren und gegebenenfalls Füllstoffen befreit werden muß, bevor es wiederverwendet werden kann. Aus der DE-PS-875 046 (J.F. Hyde; ausgegeben am 30.04.1953 für Dow Corning Corp., USA) ist ein Verfahren zur Herstellung von zyklischen Dialkylsiloxanen bekannt, wobei Hydrolysierungsgemische, bestehend aus Dialkylsiloxan- und Monoalkylsiloxaneinheiten vorzugsweise unter Ausschluß von Sauerstoff erhitzt werden. Die Verwendung von Silikonkautschukvulkanisaten und die Trennung von Silikon und Füllstoff ist nicht erwähnt.

Der vorliegenden Erfindung liegt die Aufgabe zugrunde, ein Verfahren bereitzustellen, durch das Silikonkautschukvulkanisate entsorgt werden, und das wiederverwendbare Produkte, insbesondere flüchtige Siloxane und Füllstoffe liefert.

Gegenstand der Erfindung ist ein Verfahren zur Pyrolyse von Silikonkautschukvulkanisaten, wobei die Vulkanisate auf 350 bis 700°C erhitzt werden und die entstehenden flüchtigen Siloxane kondensiert werden.

Das erfindungsgemäße Verfahren eignet sich zur Pyrolyse beliebiger Silikonkautschukvulkanisate, beispielsweise für Heiß- (HTV) und Kaltkautschuke (RTV), die peroxidisch, durch Schwefel, durch Addition von Si-H Gruppen an Kohlenstoff-Kohlenstoff Doppelbindungen, durch photochemische Addition von S-H Gruppen an Kohlenstoff-Kohlenstoff Doppelbindungen, durch Vernetzung mit Y und $\beta$-Strahlen, durch Kondensation oder Reaktion von Si-H Gruppen mit Si-OH Gruppen vernetzt worden sind. Erfindungsgemäß verwendbare Silikonkautschukvulkanisate und deren Herstellung sind z.B. in M. Wick, G. Kreis und F.H. Kreuzer, Ullmanns Encyklopädie der technischen Chemie 4.Aufl. (1982) Bd.21, S.521 bis 530 beschrieben.

Die erfindungsgemäß verwendbaren Silikonkautschukvulkanisate sind aufgebaut aus Einheiten von Polydialkylsiloxanen mit gegebenenfalls substituierten $C_1$-$C_6$-Alkyl- oder Phenylresten, vorzugsweise Methylresten.

Die substituierten Reste können z.B. Cyanalkylreste, wie der $\beta$-Cyanethylrest, halogenierte Kohlenwasserstoffreste, beispielsweise Halogenalkylreste, wie der 3-Chlorpropylrest und der 3,3,3-Trifluor-n-propylrest, und Halogenarylreste, wie der o-, m-, und p-Chlorphenylrest oder Alkylreste sein, die in 3-Stellung am Propylrest gebundene Polyglykoletherreste aus beispielsweise Ethylenglykol oder Propylenglykol tragen.

Ein kleiner Teil der Reste R, höchstens 0,1 % der Reste kann eine kondensierbare Gruppe, wie die OH-, Alkoxy-, Acetoxy- und Amino-Gruppe, eine addierbare Gruppe, wie die Vinylgruppe oder das Wasserstoffatom oder ein $C_1$-$C_{18}$-Kohlenwasserstoffrest sein, der eine kondensierbare oder addierbare Gruppe trägt.

Bei der Pyrolyse der besonders bevorzugten Vulkanisate von Polydimethylsiloxankautschuk entstehen bei Temperaturen von 450 bis 600°C vorwiegend Siloxanzyklen mit 3 bis 10 Siloxaneinheiten, wobei niedere Zyklen bevorzugt gebildet werden. Von den flüchtigen Siloxanen wird bei den vorstehenden Temperaturen mehr als 50% Hexamethylcyclotrisiloxan gebildet. Die Ausbeute der besonders wertvollen Siloxanzyklen mit 3 und 4 Siloxaneinheiten beträgt unter diesen Bedingungen immer über 70%.

Viele Silikonkautschukvulkanisate enthalten als Weichmacher niederviskose Silikonöle. Diese Silikonöle beeinflussen die Zusammensetzung der gebildeten flüchtigen Siloxane kaum.

Die erfindungsgemäße Pyrolyse kann in Anwesenheit eines Fremdgases, d.h. eines Gases, das kein entstehendes flüchtiges Siloxan ist, durchgeführt werden. Als Fremdgase eignen sich die üblichen Inertgase, wie Stickstoff und Argon, aber auch Wasser und Ammoniak sind geeignet. Saure Fremdgase, wie Chlorwasserstoff, mit oder ohne Wasser sind weniger geeignet, da sie die Ausbeute an höheren Zyklen fördern.

Die Anwesenheit von Luftsauerstoff ändert das Verhältnis der Produkte kaum, da diese sehr schnell gebildet werden und durch ihre Flüchtigkeit sofort aus der heißen Zone entfernt werden, bevor größere Mengen oxidiert werden. Der Rückstand der Pyrolyse nimmt auch nicht zu. Der apparative Aufwand kann deshalb gering gehalten werden. Die Explosionsgrenzen von Luft mit flüchtigen Siloxanen müssen dabei beachtet werden. Beispielsweise kann der Reaktionsraum in der Aufheiz- und Abkühlphase unter Inertgas gesetzt werden. Sobald die Pyrolyse einsetzt werden soviele flüchtige Siloxane gebildet, daß in Luft vorhandener Sauerstoff nicht mehr zu einer explosionsartig verlaufenden Oxidation ausreicht. Die Reaktion kann problemlos im Luftstrom durchgeführt werden, wobei immer wieder frischer Sauerstoff an das Produkt gelangt.

Die flüchtigen Siloxane werden kondensiert, nachdem sie die Reaktionszone verlassen haben. Vorzugsweise werden die flüchtigen Siloxane in einem Fremdgasstrom aus der Reaktionszone entfernt. Die Siloxane können in reiner Form, in einem Lösungsmittel oder in einer Flüssigkeit kondensiert werden, in der sie nicht löslich sind. Die Art der Kondensation hängt von der beabsichtigten Verwendung der Siloxane ab.

Die erfindungsgemäße Pyrolyse kann unter vermindertem Druck oder bei Atmosphärendruck durchgeführt werden. Erhöhter Druck behindert thermodynamisch die Entstehung flüchtiger Siloxane und ist deshalb nicht bevorzugt.

Die erfindungsgemäße Pyrolyse kann in beliebigen Pyrolyseapparaturen durchgeführt werden. Geeignet sind beispielsweise Apparaturen, in denen die Pyrolyse in einem Muffelofen, Rohrofen oder Drehrohrofen stattfindet und bei denen die flüchtigen Siloxane in einer gekühlten Vorlage kondensiert werden.

Das erfindungsgemäße Verfahren eignet sich in besonderer Weise für füllstoffhaltige Silikonkautschukvulkanisate. Bei deren Pyrolyse entstehen im vorstehend beschriebenen Temperaturbereich ebenfalls die vorstehend beschriebenen cyclischen Siloxane in nahezu quantitativer Ausbeute, so daß die Silikone von den Füllstoffen getrennt werden.

Der Rückstand der Pyrolyse enthält die anorganischen Füllstoffe. Wenn der Rückstand noch organische Verunreinigungen oder Ruß enthält, können diese durch Oxidation mit Sauerstoff entfernt werden. Diese Oxidation kann schon während der Pyrolyse durch anwesende Luft erfolgen oder, wenn die Pyrolyse unter Inertgas durchgeführt wird, durch Einleiten von Luft oder Luftsauerstoff im Anschluß an die Pyrolyse.

Beispiele für anorganische Füllstoffe sind nicht verstärkende Füllstoffe, also Füllstoffe mit einer BET-Oberfläche von bis zu 50 $m^2$/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips und Glaspulver; verstärkende Füllstoffe, also Füllstoffe mit einer BET-Oberfläche von mehr als 50 $m^2$/g, wie pyrogen hergestellte Kieselsäure, gefällte Kieselsäure und Silicium-Aluminium-Mischoxide großer BET-Oberfläche.

Die genannten Füllstoffe, insbesondere Kieselsäuren, können hydrophobiert sein, beispielsweise durch die Behandlung mit Organosilanen bzw. -siloxanen oder -silazanen oder durch Verätherung von Hydroxylgruppen zu Alkoxygruppen. Die hydrophoben Eigenschaften der Füllstoffe bleiben nach der Pyrolyse bestehen und zuvor hydrophile Füllstoffe werden in hydrophobe umgewandelt.

Die Füllstoffe können beispielsweise zur Herstellung neuer Silikonkautschuke verwendet werden. Die dabei erhaltenen Silikonkautschuke können zu Vulkanisaten verarbeitet werden, die den pyrolysierten Vulkanisaten vergleichbare Eigenschaften zeigen.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 25°C.

Die nachstehenden Abkürzungen bedeuten:

D3 bis D8: cyclische Dimethylsiloxane, bei denen die Zahl nach D die Anzahl der Dimethylsiloxaneinheiten bedeutet.

Polymer A: $\alpha,\omega$-Trimethylsilylendständiges Polydimethyl-Siloxan mit ca. 0,1 Mol-% Methylvinylsiloxaneinheiten statistisch verteilt

Polymer B: $\alpha,\omega$-Trimethylsilylendständiges Polydimethyl-Siloxan

HDK T30: in der Flamme hergestellte hochdisperse Kieselsäure mit einer BET-Oberfläche von 300 $m^2$/g

Weichmacher: lineares Polydimethylsiloxan mit 3 Mol-% Si-OH Gruppen und einer Viskosität von 50 $mm^2$/s

Beispiele

**Beispiel 1**

Abhängigkeit des Verfahrens von der Temperatur

Ein Vulkanisat aus ca. 69 % Polymer A mit 27% HDK T30 und 4 % Weichmacher wurde in einem Gasstrom von 2 l/h Stickstoff 5,5 h in einem Muffelofen pyrolysiert. Die flüchtigen Produkte wurden quantitativ in Toluol als Kondensate aufgefangen und NMR-spektroskopisch charakterisiert.

Die Ergebnisse sind in Tabelle I aufgeführt.

## Tabelle I

| Temperatur | 450°C | 500°C | 550°C | 600°C |
|---|---|---|---|---|
| Rückstand (%) | 56,0 | 30,1 | 29,7 | 29,2 |
| Kondensatzusammen-setzung (Mol-%) | | | | |
| D3 | 54,7 | 50,9 | 55,7 | 53,4 |
| D4 | 24,2 | 20,2 | 19,3 | 20,5 |
| D5 | 7,4 | 6,5 | 5,8 | 6,2 |
| D6 | 2,6 | 6,5 | 3,8 | 3,7 |
| D7 | 1,6 | 3,6 | 1,9 | 1,9 |
| D8 | Spuren | 0,7 | Spuren | 0,6 |
| Höhere Zyklen | 9,5 | 11,6 | 13,5 | 13,7 |

**Beispiel 2**

Abhängigkeit von der Reaktionsdauer

Die Versuche wurden gemäß Beispiel 1 bei 500°C und 600°C durchgeführt.
Die Ergebnisse sind in Tabelle II und III aufgeführt.

Tabelle II: Reaktionstemperatur 500°C

| Dauer | 0,25 h | 0,50 h | 5,50 h |
|---|---|---|---|
| Rückstand (%) | 68,9 | 39,7 | 30,1 |
| Kondensatzusammen-setzung (Mol-%) | | | |
| D3 | 53,1 | 58,0 | 50,9 |
| D4 | 23,5 | 24,5 | 20,2 |
| D5 | 6,4 | 6,5 | 6,5 |
| D6 | 3,4 | 3,5 | 6,5 |
| D7 | 2,1 | 2,0 | 3,6 |
| D8 | Spuren | Spuren | 0,7 |
| Höhere Zyklen | 11,5 | 5,5 | 11,6 |

Tabelle III: Reaktionstemperatur 600°C

| Dauer | 0,25 h | 0,50 h | 2,00 h | 5,50 h |
|---|---|---|---|---|
| Rückstand (%) | 32,4 | 31,6 | 30,7 | 29,2 |
| Kondensatzusammen-setzung (Mol-%) | | | | |
| D3 | 55,7 | 59,7 | 54,3 | 53,4 |
| D4 | 24,2 | 22,6 | 24,3 | 20,5 |
| D5 | 6,3 | 6,1 | 6,8 | 6,2 |
| D6 | 4,2 | 4,3 | 4,4 | 3,7 |
| D7 | 2,9 | 1,8 | 2,4 | 1,9 |
| D8 | Spuren | 0,6 | Spuren | 0,6 |
| Höhere Zyklen | 6,7 | 4,9 | 7,8 | 13,7 |

**Beispiel 3**

Einfluß von Fremdgasen

Die Versuche wurden gemäß Beispiel 1 bei 500°C durchgeführt. Es wurde ein leichter Stickstoffstrom durch eine mit konzentrierter Ammoniaklösung, Wasser bzw. konzentrierter Salzsäure beladene Vorlage bei 25°C geleitet. In einem Versuch wurde Stickstoff durch Luft ersetzt.
Die Ergebnisse sind in Tabelle IV aufgeführt.

5

## Tabelle IV

| | Blindwert Stickst. | Ammoniak | Wasser | Salz-säure | Luft |
|---|---|---|---|---|---|
| Rückstand | 31,2 | 30,0 | 30,1 | 29,6 | 31,4 |
| Kondensatzusammen-setzung (Mol-%) | | | | | |
| D3 | 62 | 52 | 56 | 42 | 54 |
| D4 | 21 | 26 | 27 | 26 | 29 |
| D5 | 5 | 7 | 6 | 10 | 7 |
| D6 | 4 | 4 | 3 | 6 | 2 |
| D7 | 2 | 2 | 2 | 2 | Spuren |
| Höhere Zyklen | 5 | 8 | 6 | 14 | 7 |

Abweichend von den vorherigen Versuchen enthält das Kondensat des Blindwertes einen höheren Gehalt an D3. Dies ist auf den geringeren Gasdurchfluß zurückzuführen.

**Beispiel 4**

Pyrolyse von füllstofffreiem Vulkanisat im Rohrofen

Mit 2,4-Dichlorbenzoylperoxid vernetztes Polymer B wurde pyrolysiert. Die Reaktionen wurden im Rohrofen bei 500°C unter einem Gasstrom von 10 l/h Stickstoff durchgeführt. Die Proben hinterließen keinen Rückstand. Das Kondensat wurde in einer Kühlfalle aufgefangen.

Die Zusammensetzung der Kondensate ist in Tabelle V aufgeführt.

Tabelle V

| Kondensatzusammen-setzung (Mol-%) | Polymer B |
|---|---|
| D3 | 35 |
| D4 | 20 |
| D5 | 8 |
| D6 | 13 |
| D7 | 6 |
| Höhere Zyklen | 17 |

**Beispiel 5**

Wiederverwendung des Füllstoffrückstandes.

Gemäß Beispiel 4 wurde das nach im folgenden aufgeführter Rezeptur hergestellte Produkt nach der Vulkanisation pyrolysiert, der Rückstand in einer Stiftmühle verrieben und gemäß der ursprünglichen Zusammensetzung wieder mit Polymer A in einem Doppelmuldenkneter vermischt. Das erhaltene Produkt wurde mit 0,7 % Dicumylperoxid versetzt und anschließend in einer Presse bei 165°C, 15 Minuten zu einer Platte verpreßt. An dieser wurden die unten angeführten Eigenschaften gemessen.

Zur Bestimmung der Hydrophobie wurde der Pyrolyserückstand in Wasser gegeben. Er schwamm auf dem Wasser. Nach Zugabe von Ethanol versank das Pulver.

Zusammensetzungen:

| Pyrolysierte Verbindung | | Verbindung mit Pyrolyserückstand | |
|---|---|---|---|
| Polymer A | 70% | Polymer A | 70% |
| Weichmacher | 5% | Weichmacher | 3% |
| Kieselsäure HDK T 30 (300 m$^2$/g) | 25% | Pyrolyserückstand | 27% |

Eigenschaften

| Pyrolysierte Verbindung | | Verbindung mit Pyrolyserückstand |
|---|---|---|
| Shore (DIN 53505) | 52 | 50 |
| Reißfestigkeit n/mm$^2$ (DIN 53504-91) | 10,1 | 10,4 |
| Reißdehnung % (DIN 53504-91) | 600 | 640 |
| Weiterreißfestigkeit n/mm (ASTM D 624B) | 28 | 30 |

**Patentansprüche**

1.  Verfahren zur Pyrolyse von Silikonkautschukvulkanisaten, wobei die Vulkanisate auf 350 bis 700°C erhitzt werden und die entstehenden flüchtigen Siloxane kondensiert werden.

2.  Verfahren nach Anspruch 1, wobei die Pyrolysetemperatur 450 bis 600°C beträgt.

3.  Verfahren nach Anspruch 1 oder 2, wobei die Pyrolyse in Anwesenheit von Luftsauerstoff erfolgt.

4.  Verfahren nach einem der Ansprüche 1 bis 3, wobei die flüchtigen Produkte in einem Fremdgasstrom aus der Reaktionszone entfernt werden.

5.  Verwendung der in dem Verfahren nach einem der Ansprüche 1 bis 4 erhaltenen hydrophoben Füllstoffe bei der Herstellung von Silikonkautschuk.

Europäisches
Patentamt

# EUROPÄISCHER RECHERCHENBERICHT

Nummer der Anmeldung

EP    92 11 3437

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 126 792 (CONS. F. ELEKTROCHEM. INDUSTRIE) <br> * Anspruch 1 * <br> --- | 1-5 | C08G77/36 |
| X | DE-B-875 046 (DOW CORNING) <br> * Anspruch 1 * <br> --- | 1-5 | |
| A | US-A-2 618 648 (BLUESTEIN) <br> * Anspruch 1 * <br><br> ----- | 1 | |

|  |  |  | **RECHERCHIERTE SACHGEBIETE (Int. Cl.5 )** |
|---|---|---|---|
|  |  |  | C08G |

Der vorliegende Recherchenbericht wurde für alle Patentansprüche erstellt

| Recherchenort | Abschlußdatum der Recherche | Prüfer |
|---|---|---|
| DEN HAAG | 18 SEPTEMBER 1992 | LENTZ J.C. |